# EUROPEAN PATENT APPLICATION

(11) **EP 2 482 114 A1**
(43) Date of publication of application: **01.08.2012**
(21) Application number: 11191421.4
(22) Date of filing: 30.11.2011
(51) Int. Cl.: G02B 27/01

(54) **Aircraft cockpit visor display**

(30) Priority: 03.12.2010 US 959503
(71) Applicant: Honeywell International, Inc., Morristown, NJ 07962-2245 (US)
(72) Inventor: Pepitone, Dave, Morristown, NJ New Jersey 07962-2245 (US); Sarma, Kalluri R., Morristown, NJ New Jersey 07962-2245 (US); Wyatt, Sandy, Morristown, NJ New Jersey 07962-2245 (US)
(74) Representative: Buckley, Guy Julian

(57) **Abstract**

An overhead visor display system for an aircraft cockpit (600) includes one or more transparent OLED visors. The visor (117) may display text and images, such as aircraft flight or system data, navigational data, conformal images of actual views outside the aircraft, or may function as a sun shade. The visor (117) may be rotated up towards the ceiling of the cockpit out of view. Optionally, the visors (117) may be moved by a pilot on a rail (602) from one side window to the front windscreen (604,606), and to the other side window.

## Description

### TECHNICAL FIELD

The exemplary embodiments described herein generally relate to the display of text and images, and more particularly to aircraft cockpit displays.

### BACKGROUND

World wide air traffic is projected to double every ten to fourteen years and the International Civil Aviation Organization (ICAO) forecasts world air travel growth of five percent per annum until the year 2020. Such growth may cause degradation in safety and performance and an increase in an already high workload of the flight crew. One negative influence on flight performance has been the ability for the aircrew to view text and images on one or more displays without degrading their ability to give the required attention to matters outside the aircraft. The ability to easily and quickly view a desired image on the display while simultaneously looking out the windscreen can significantly improve situational awareness of the flight crew resulting in increased flight safety and performance by reducing the flight crew workload.

Electronic instrumentation displays continue to advance in sophistication, achieving increasingly higher levels of information density and, consequently, presenting a greater amount of visual information to be perceived and understood by the operator, e.g., pilot. The number of possible screen images that may be selected have also increased. The operator may have many image options available, including, for example, aviation maps such as desired flight path and terrain maps, and aircraft system maps such as hydraulic, electrical, and fuel.

Furthermore, it is important for pilots to know the positioning of other aircraft when airborne and the layout of the taxiways and runways when taxing for takeoff or from landing. Visually locating and tracking other airborne aircraft and navigation of an airport surface (taxiways/runways) can be difficult from a pilot's workload perspective and undesirable from an aviation safety perspective, especially in limited visibility of night and/or weather, or at unfamiliar airports. A decrease in pilot workload typically results in increased safety: it is advantageous for the pilot to have more heads up time so as to view critical events occurring outside the aircraft. Undesired results include losing sight of another airborne aircraft, taxing onto unapproved taxiways/runways, not being made aware of an obstacle, and becoming disorientated.

Next Generation Air Transportation System (NEXT GEN) and Single European Sky Air Traffic Management Research (SESAR) requirements need alternatives to the current ways and means of displaying information to the flight crew. NEXT GEN and SESAR will implement equivalent visual operations (EVO) in both the terminal and the airport surface areas. Communications will be for all phases of flight via data comm. In addition, displays such as the Heads Up Display (HUD), Multifunction Control Display Unit (MCDU), Electronic Flight Bags (EFBs) and even the forward displays are limited in their display space and are totally inflexible to the visual monitoring needs of the pilot should the pilot have to monitor forward areas while remaining heads up. HUDS and EFBs add weight, complexity, mounting superstructure issues and concerns.

Accordingly, it is desirable to provide a display presenting text and images while minimizing any distractions to the pilot maintaining visual awareness outside the aircraft. Furthermore, other desirable features and characteristics of the exemplary embodiments will become apparent from the subsequent detailed description and the appended claims, taken in conjunction with the accompanying drawings and the foregoing technical field and background.

### BRIEF SUMMARY

A visor display configured to be positioned above or in the field of view of a window is provided for displaying information.

In an exemplary embodiment, a display system contained in an interior of a structure has a first window, the display system comprises a rail positioned above the first window, a first visor display rotatably mounted on the rail so as to be positioned above or in the field of view of the first window, and a processor configured to provide at least one of text or images to the first visor display.

In another exemplary embodiment, a display system contained in a cockpit of an aircraft has a first front windscreen and a first side window, the display system comprising a rail positioned above the first windscreen, a visor display rotatably mounted to the rail so as to be positioned in one of above or in the field of view of the first front windscreen, and a processor configured to provide at least one of text and images to the visor display.

In yet another exemplary embodiment, a method of operating a display system contained in a cockpit of an aircraft, comprises rotating a visor display about a rail positioned above a first front windscreen so as to position the visor display in or above the field of view of the front windscreen, and displaying at least one of text and images on the visor display.

### BRIEF DESCRIPTION OF THE DRAWINGS

The present invention will hereinafter be described in conjunction with the following drawing figures, wherein like numerals denote like elements, and

FIG. 1 is a functional block diagram of an aircraft flight system;

FIG. 2 is a cross sectional view of a known organic light emitting diode (OLED) display;

FIG. 3 is a visor display showing a menu of selectable items in accordance with an exemplary embodiment;

FIG. 4 is a visor display showing selected data in accordance with another exemplary embodiment;

FIG. 5 is a visor display showing an image from outside the aircraft in accordance with yet another exemplary embodiment;

FIG. 6 is a front view of the visor positioned in front of the pilot of an aircraft;

FIG. 7 is a front view of the visor centered between pilots of an aircraft;

FIG. 8 is a front view of two visors, each centered in front of a pilot;

FIG. 9 is a front view of a visor display attached to a rail in accordance with another exemplary embodiment;

FIG. 10 is a side cross sectional view of the visor of FIG. 6;

FIG. 11 is a front view of an electronic cable associated with the rail of FIG. 6;

FIG. 12 is a front view of a visor display attached to an extendable arm in accordance with still another exemplary embodiment;

FIG. 13 is a front view of the visor display of FIG. 12 in an extended position; and

FIGS. 14, 15, and 16 are side views are yet another exemplary embodiment of coupling the visor display within the aircraft..

### DETAILED DESCRIPTION

The following detailed description is merely illustrative in nature and is not intended to limit the embodiments of the subject matter or the application and uses of such embodiments. Any implementation described herein as exemplary is not necessarily to be construed as preferred or advantageous over other implementations. Furthermore, there is no intention to be bound by any expressed or implied theory presented in the preceding technical field, background, brief summary, or the following detailed description.

One or more visor displays may be configured to provide information or be darkened to provide a sunscreen when positioned in the windscreen viewing field, or be placed in a power saving mode when positioned up away from the viewing field against the cockpit ceiling. The one or more visors in another embodiment may be moved along a rail to a position by the left side window, anywhere on the front windscreen, or the right side window. A visor may be positioned in front of both pilots at the front window center post so both pilots can review the information. An organic light emitting diode (OLED) display is preferred due to its light weight, transparency, excellent image quality with a large color gamut, high speed video, and a wide viewing angle. The rail on which the visor or visors may be mounted includes an electronics cable for providing power and data to the visor. The one or more visor displays may be attached to the rail by extendable arms for positioning the visor displays down away from the rail. The extendable arms may be rotated with respect to the rail, and the visor may be rotated with respect to the extendable arm, for positioning the visor displays in one of several positions. The information displayed on the visor may be, for example, conformal images of actual objects outside the aircraft and flight information including aircraft flight data, aircraft system data, and navigation data.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

For the sake of brevity, conventional techniques related to graphics and image processing, navigation, flight planning, aircraft controls, aircraft data communication systems, and other functional aspects of certain systems and subsystems (and the individual operating components thereof) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

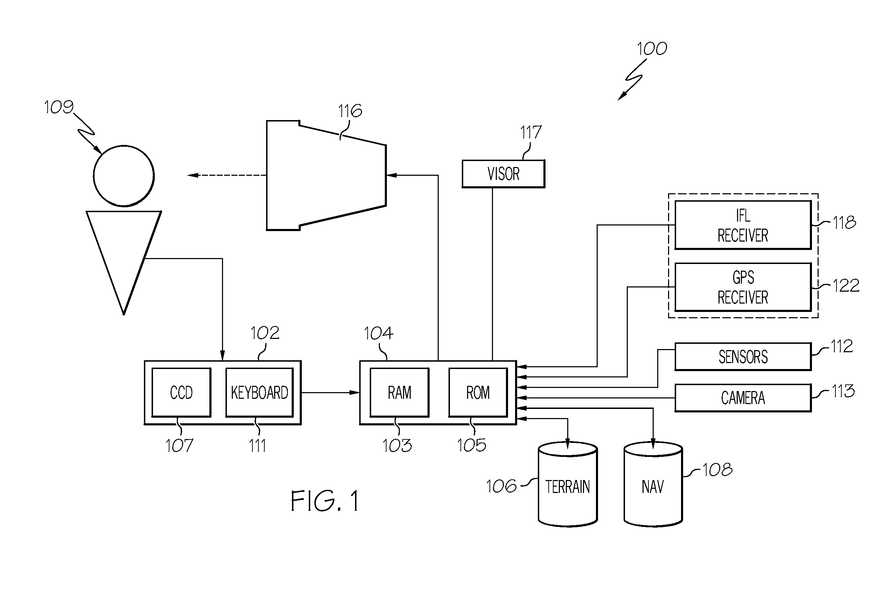

Though the method and system of the exemplary embodiments may be used in any stationary platform or any type of mobile vehicle, for example, automobiles, ships, and heavy machinery, the use in an aircraft system is described as an example. Referring to FIG. 1, a flight deck display system 100 includes a user interface 102, a processor 104, one or more terrain databases 106 (including runway and taxiway information), one or more navigation databases 108, sensors 112, a camera 113, external data sources 114, one or more display devices 116, and a visor display 117. The user interface 102 is in operable communication with the processor 104 and is configured to receive input from a user 109 (e.g., a pilot) and, in response to the user input, supplies command signals to the processor 104. The user interface 102 may be any one, or combination, of various known user interface devices including, but not limited to, one or more buttons, switches, knobs, and touch panels (not shown). Specifically, the user interface may be a cursor control device with soft key activation for controlling the visor display described herein.

The processor 104 may be implemented or realized with a general purpose processor, a content addressable memory, a digital signal processor, an application specific integrated circuit, a field programmable gate array, any suitable programmable logic device, discrete gate or transistor logic, discrete hardware components, or any combination designed to perform the functions described herein. A processor device may be realized as a microprocessor, a controller, a microcontroller, or a state machine. Moreover, a processor device may be implemented as a combination of computing devices, e.g., a combination of a digital signal processor and a microprocessor, a plurality of microprocessors, one or more microprocessors in conjunction with a digital signal processor core, or any other such configuration. In the depicted embodiment, the processor 104 includes on-board RAM (random access memory) 103, and on-board ROM (read-only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented.

The processor 104 is also configured to process, generate, measure, and/or provide different types of data related to the operational status of the host aircraft, the environment in which the host aircraft is operating, flight parameters, and the like. In practice, the sources of flight status data may be realized using line replaceable units (LRUs), transducers, accelerometers, instruments, sensors, and other well known devices. The data provided by the sources of flight status data may include, without limitation: airspeed data; groundspeed data; altitude data; attitude data, including pitch data and roll data; yaw data; geographic position data, such as GPS data; time/date information; heading information; weather information; flight path data; track data; radar altitude data; geometric altitude data; wind speed data; wind direction data; etc. The visor display 117 can use the flight status data of the host aircraft when rendering its display.

The memory 103, 105 may be realized as RAM memory, flash memory, EPROM memory, EEPROM memory, registers, a hard disk, a removable disk, a CD-ROM, or any other form of storage medium known in the art. In this regard, the memory 103, 105 can be coupled to the processor 104 such that the processor 104 can be read information from, and write information to, the memory 103, 105. In the alternative, the memory 103, 105 may be integral to the processor 104. As an example, the processor 104 and the memory 103, 105 may reside in an ASIC. In practice, a functional or logical module/component of the display system 100 might be realized using program code that is maintained in the memory 103, 105. For example, the memory 103, 105 can be used to store data utilized to support the operation of the display system 100, as will become apparent from the following description.

No matter how the processor 104 is specifically implemented, it is in operable communication with the terrain databases 106, the navigation databases 108, the display devices 116, the visor display 117, and is coupled to receive various types of inertial data from the sensors 112, the camera 113, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116 and the visor display 117. The display devices 116 and the visor display 117, in response to the display commands, selectively render various types of textual, graphic, and/or iconic information.

The terrain databases 106 include various types of data representative of the terrain including taxiways and runways over which the aircraft is moving, and the navigation databases 108 include various types of navigation-related data. The sensors 112 may be implemented using various types of inertial sensors, systems, and or subsystems, now known or developed in the future, for supplying various types of inertial data, for example, representative of the state of the aircraft including aircraft speed, heading, altitude, and attitude. In at least one described embodiment, the sensors 112 include an Infrared camera. The other avionics receivers 118 include, for example, an ILS receiver and a GPS receiver. The ILS receiver provides aircraft with horizontal (or localizer) and vertical (or glide slope) guidance just before and during landing and, at certain fixed points, indicates the distance to the reference point of landing on a particular runway. The ILS receiver may also give ground position. The GPS receiver is a multi-channel receiver, with each channel tuned to receive one or more of the GPS broadcast signals transmitted by the constellation of GPS satellites (not illustrated) orbiting the earth.

The display devices 116 and the visor display 117, as noted above, in response to display commands supplied from the processor 104, selectively render various textual, graphic, and/or iconic information, and thereby supplies visual feedback to the user 109. It will be appreciated that the display device 116 and visor display 117 may be implemented using any one of numerous known display devices suitable for rendering textual, graphic, and/or iconic information in a format viewable by the user 109. Non-limiting examples of such display devices include various flat panel displays such as various types of LCD (liquid crystal display), TFT (thin film transistor) displays, and projection display LCD light engines. The display devices 116 may additionally be implemented as a panel mounted display, or any one of numerous known technologies. It is additionally noted that the display may be configured as any one of numerous types of aircraft flight deck displays. For example, it may be configured as a multi-function display, a horizontal situation indicator, or a vertical situation indicator.

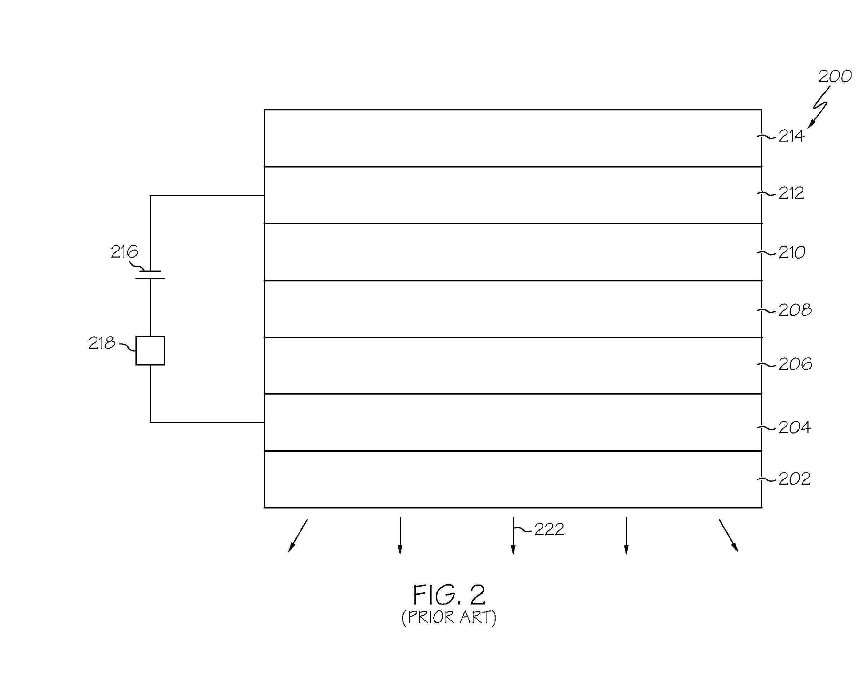

As previously noted, the visor display 117 is preferably an OLED display because of its light weight, transparency, excellent image quality with a large color gamut, high speed video, and a wide viewing angle; however, other types of displays, for example, a active matrix liquid crystal display, could be used. The transparent OLED glass display can be as thin as 1.0 mm or even thinner, weighing as little as about 0.7 grams per square inch of the display surface. The preferred embodiment shown in FIG. 2 is a cross sectional view of a known OLED display 200 includes a first electrode 204 (anode) formed on a substrate 202. The substrate typically is formed of a transparent, sturdy, thin material such as glass, but may be a flexible polymer such as polyethylene terephthalate (PET) or polyethylene naphthalate (PEN), for example. A hole transport layer 206 is formed on the first electrode 204. The first electrode 204 and the hole transport layer 206 may be, for example, indium tin oxide (ITO) or poly-3,4-ethylenedioxthiophene (PEDOT). An organic layer 208 is an emission layer. A typical example of the emission layer is organo metallic compound such as tris (8-hydroxyquinoline) aluminum, also known as Alq3, formed on the hole transport layer 206. Note that the hole transport layer 206 could also be made of inorganic materials. An electron transport layer 210 and a second electrode 212 (cathode) are then formed over the organic layer 208. The electron transport layer 210 typically is oxydiazole derivative (OXD). The first electrode 204 is transparent while the second electrode 212, is typically a semitransparent cathode metal for achieving a transparent OLED display mode. A top substrate 214, typically similar in composition to that of bottom substrate 202, is formed over the second electrode 210.

In operation, a voltage from the voltage source 216 is selectively applied by switch 218 across the first and second electrodes 204, 212, causing a current of electrons to flow from the cathode to the anode. Therefore, the cathode 212 gives electrons to the electron transport layer 210 and the anode 204 withdraws electrons from the hole transport layer 206, causing the electron transport layer 210 to become negatively charged and the hole transport layer 206 to become replete with positive charged holes. Electrostatic forces bring the electrons and holes towards each other where they radiatively recombine within the organic layer 208, accompanied by light emission. For the transparent OLED structure with a semitransparent cathode, light is emitted through the bottom glass substrate 202 as well as the top glass substrate 214. Transparancy of the OLED display can be optimized by optimizing the transparent emission region of the pixel and the transparent see-through region of the pixel. Also, the efficiency of the transparent display can be optimized by utilizing a non-transparent cathode electrode and patterning it so that it is removed from the transparent see-through area of the pixel. In this structure, OLED light emission will be only in the direction of the viewer (pilot), and the transparent see-through region of the pixel would have very high transmission.

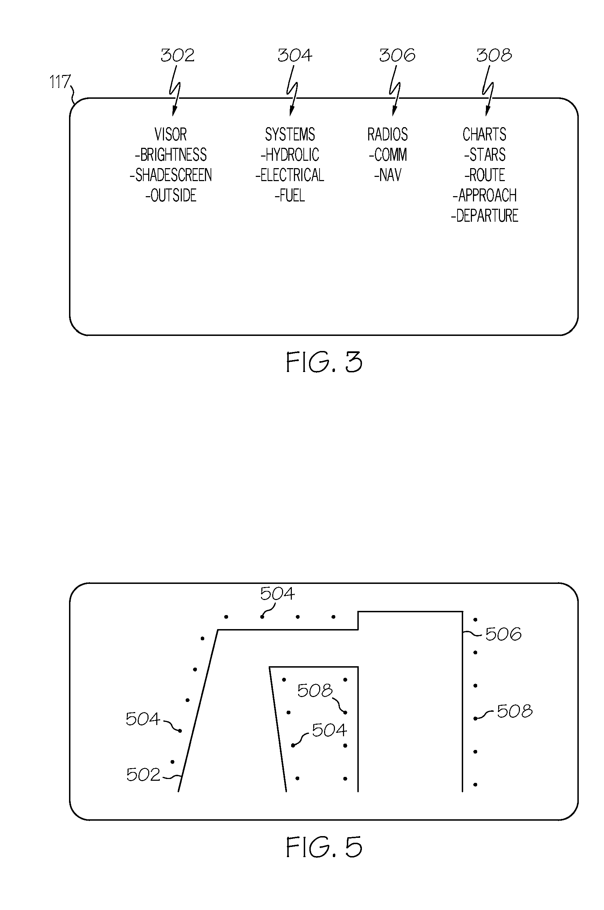

Examples of items that may be displayed on the visor display 117 are shown in FIGS. 3-5. FIG. 3 is an example of a menu that may be presented on the visor display 117. Illustrated are four columns including visor 302, systems 304, radios 306 and charts 308. Selections within the visor 302 column include brightness (for adjustment thereof), shade screen (to shade the sun), and outside (view, discussed below with reference to FIG. 5). Selections within the systems 304 column include the diagrams of hydraulic, electrical, and fuel systems. Selections within the radio 306 column include COMM (communications) and NAV (navigation). Selections within the charts 310 column include diagrams of stars, route, approach, and departure. The visor display may be a touch screen in which the desired item to be displayed would be touched on the screen. Alternatively, a cursor on the visor display may be moved by a control device located elsewhere, for example, on the yoke, sidewall, or center pedestal. In this manner, information can be presented to the operator 109 on the semi-transparent visor display 117 superimposed on the visible scene beyond, for example, the controls and other items inside the cockpit and/or the outside view through the window of the cockpit. Input to the visor display 117 could also be provided by voice input.

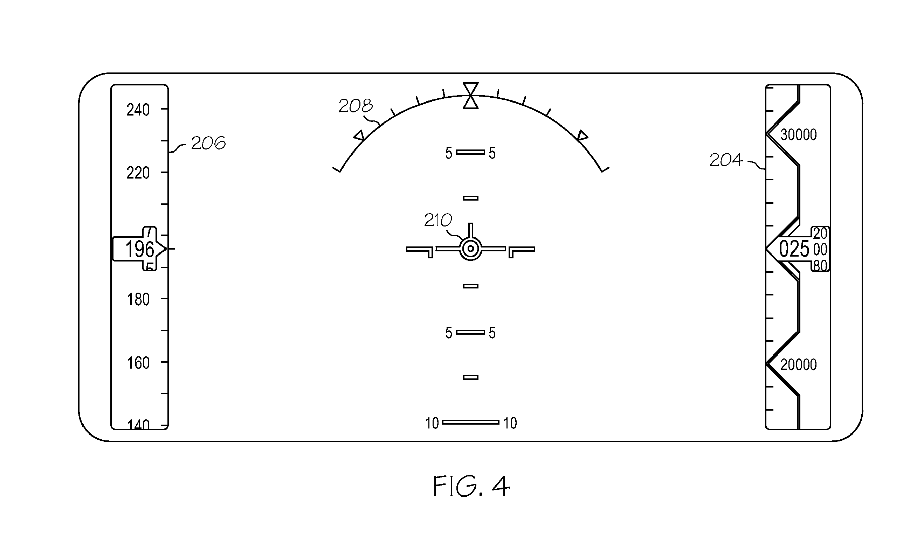

Referring to FIG. 4, exemplary navigational information/data of a first exemplary embodiment rendered by the visor display 117, in response to appropriate display commands from the processor 104 is depicted. It is seen that the visor display 117 renders navigational information including an altitude indicator 204, an airspeed indicator 206, an attitude indicator 208, and a flight path vector indicator 210. The information displayed is determined, for example, by the processor 104 using data from the navigation database 108, the sensors 112, and the external data sources 114. It will be appreciated, however, that the desired information may be determined by one or more other systems or subsystems, and from data or signals supplied from any one of numerous other systems or subsystems within, or external to, the aircraft. Regardless of the particular manner in which the desired information is determined, the processor 104 supplies appropriate display commands to cause the visor display 117 to render the appropriate information. Additional information (not shown) may be provided in either graphic or numerical format representative, for example, of glide slope, altimeter setting, and navigation receiver frequencies. In addition, and as will now be described in more detail, the visor display 117, at least during an approach and/or landing of the aircraft, may selectively render information representative of a flight path for intersecting a runway center line or an instrument generated approach path. Furthermore, two or more menus/diagrams may be displayed on the visor display 117 simultaneously. For example, navigational data (such as shown in FIG. 4), a hydraulics systems diagram, and communications status information may be displayed in three side by side windows, or areas, on the visor display 117.

The exemplary outside view mentioned above and shown in FIG. 5 is obtained from the Infrared camera 113 or any suitable image capturing device or system, which is positioned on the aircraft for imaging any obstacles in its view within a distance of the aircraft. In other embodiments, the displayed outside view could be a synthetic graphical representation (virtual display) of the actual environment. The forward looking Infrared camera 113 may rotate or be stationary and can operate in any one of at least two modes. It may display the images on the visor display 117 as Infrared images in a first mode of operation or as conformal images in a second mode of operation. When rotatable, the camera 113 is gimbaled to the position of the visor display system 117 when attached to a rail. The Infrared camera 113 preferably can rotate about 180 degrees, 90 degrees to either direction from the nose of the aircraft and in a plane with the taxiway, and is coupled to the processor 104 for receiving actual video images taken by the Infrared camera 113 for conversion into conformal video images by the processor 104 for display on the visor display 117. For example, the visor display 117 of FIG. 5 shows a taxiway 502 bordered by taxiway lights 504 (conventionally blue), and a runway 506 bordered by runway lights 508 (conventionally white).

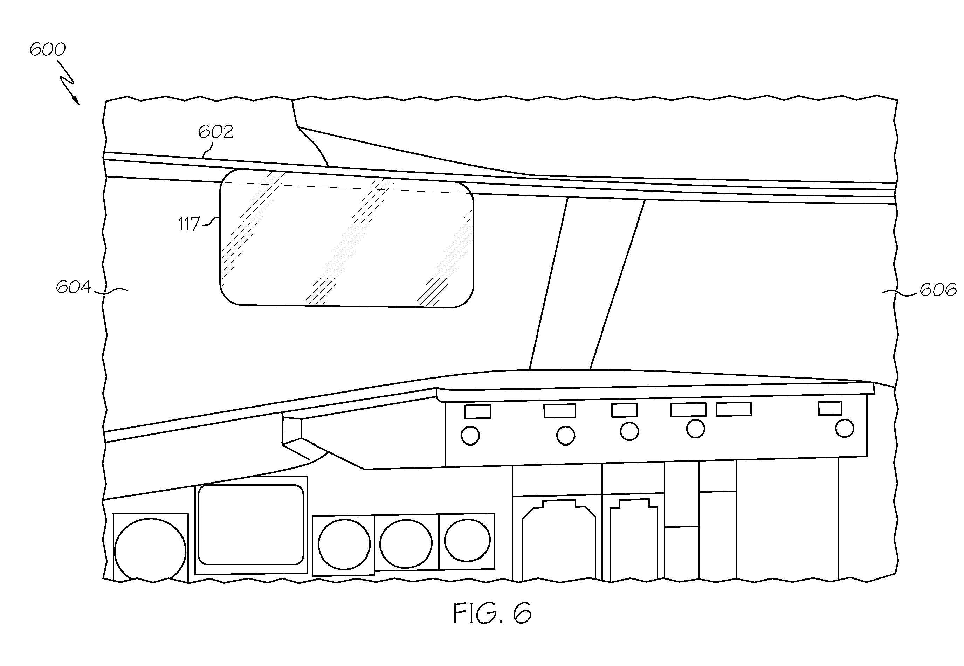

FIG. 6 is a picture of the inside of a cockpit 600 of an aircraft showing the visor display 117 attached at a position above and in front of the pilot in the left seat. The visor display may be rotatably mounted in the position shown, or slideably and rotatably mounted on a rail 602 so the visor display may be moved from a position above a left side window (not shown), across the front wind screens 604, 606, to a right side window (not shown).

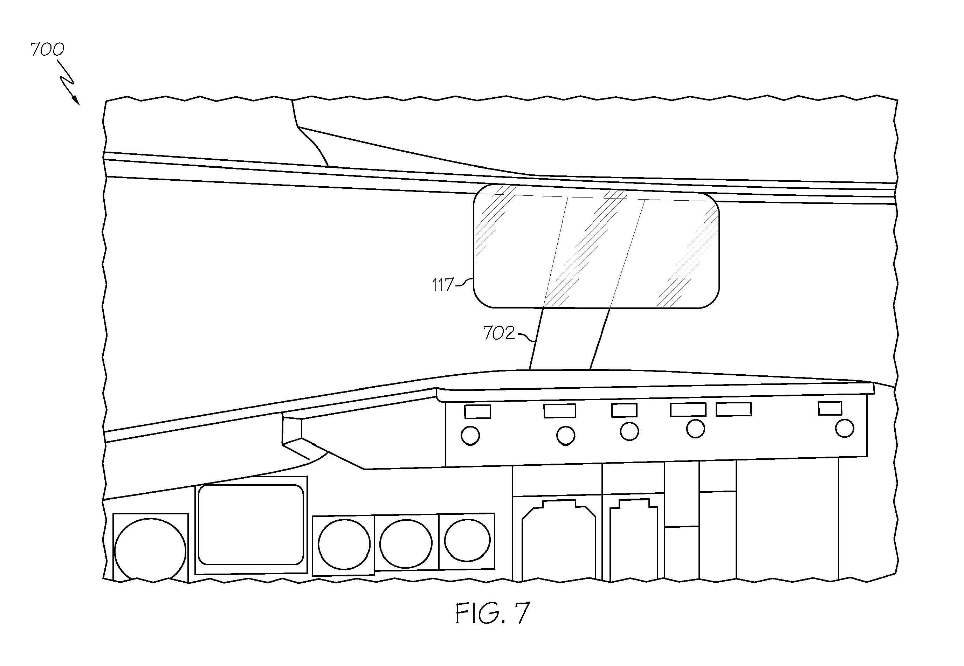

FIG. 7 is a picture of the inside of a cockpit 600 of an aircraft showing the visor display 117 positioned in front of a center post 702 where it may be viewed by a pilot in the left seat and a co-pilot in the right seat.

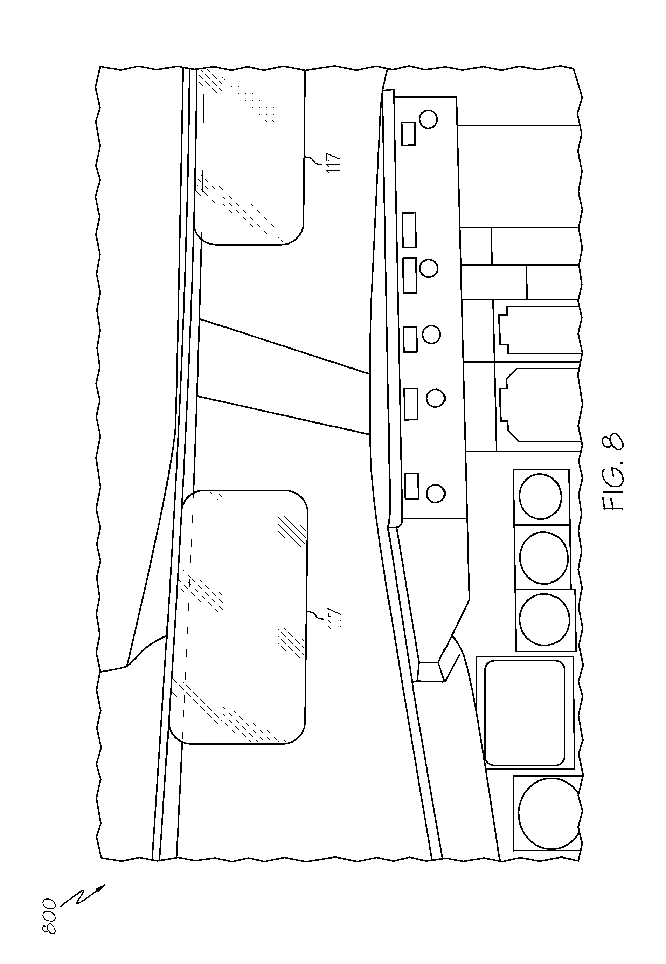

FIG. 8 is a picture of the inside of a cockpit 800 of an aircraft showing a visor display 117 moved to or attached at a position above and in front of the pilot in the left seat, and another visor display 117 moved to or attached at a position above and in front of the co-pilot in the right seat.

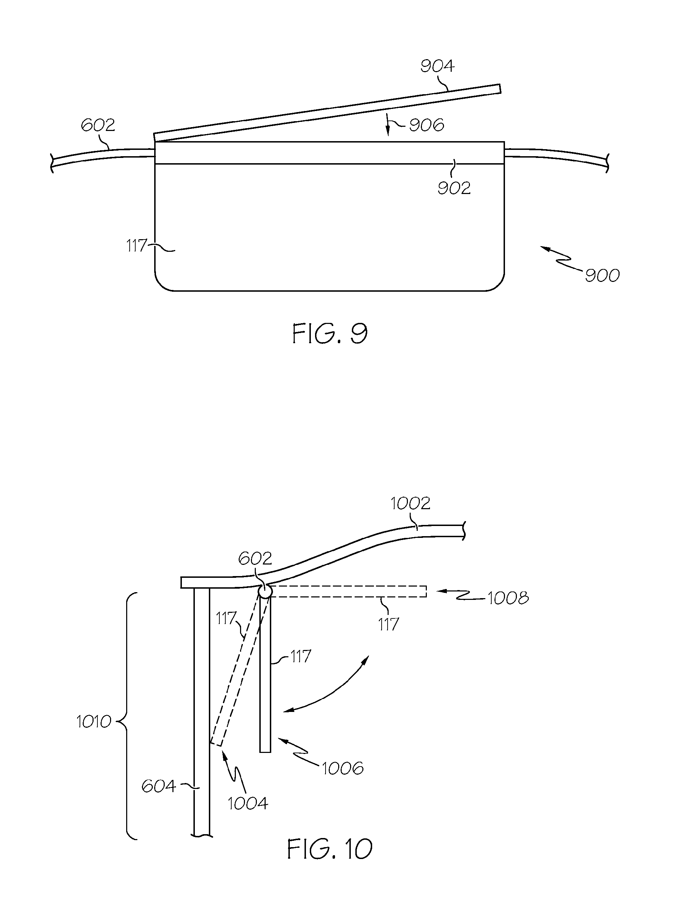

The visor display 117 may be attached to the rail 602 (FIG. 9), for example, by positioning a receiving mechanism 902 on or around the rail 602. In preferred embodiments, only one rail is used to accommodate any number of visor displays that might be deployed in the cockpit. Alternatively, a rail assembly or mechanism comprising a plurality of individual rail elements (coupled together in a suitable manner) could be utilized. Moreover, a plurality of parallel rails might be used instead of a single overhead rail. A locking lever 904 is rotatably mounded to the receiving mechanism 902. When the locking lever 904 is moved (in the direction of the arrow 906) towards and into the receiving mechanism 902, the visor display is slideably and rotatably mounted on the rail 602. In this regard, the visor display 117 may rotate into any one of several positions. It may be rotated, on an axis within the rail up against the ceiling of the cockpit out of the outside field of view, or it may be rotated down into the field of view. Furthermore, the visor display 117 may be moved along the rail from one window to another or in between.

A side view showing three possible positions of the visor display 117 mounted on the rail 602 (FIG. 10) includes the rail 602 mounted on the ceiling 1002 of the aircraft, with a first position 1004 of the visor display 117 angled toward the windscreen 604, a second position 1006 essentially parallel with the windscreen 604, and a third position 1008 up towards the ceiling 1002 out of the field of view 1010 of the pilot.

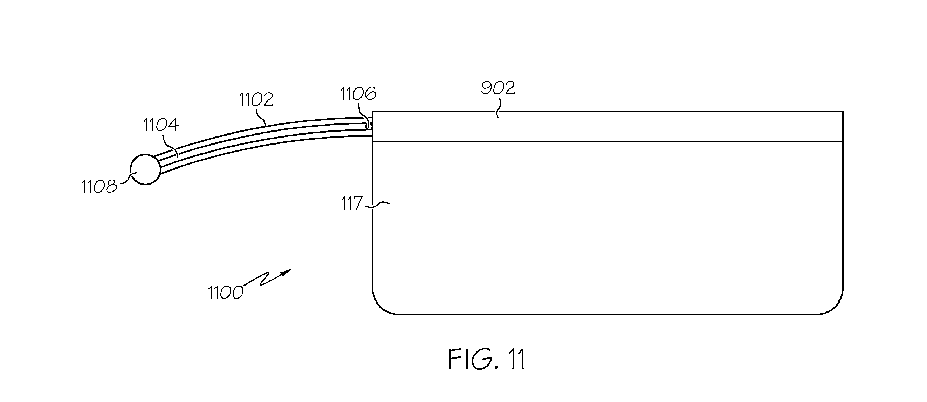

FIG. 11 illustrates one exemplary embodiment 1100 of providing power and data to the visor display 117. A cable 1104 is provided within a hollow rail 1102 and in communication with an electrical connector 1106. The electrical connector 1106 transfers power and the data and/or images to the visor display 117 in a well known manner. The cable 1104 is maintained within the rail 1102 without any slack by being fed into the rail 1102 by a tensioned reel 1108.

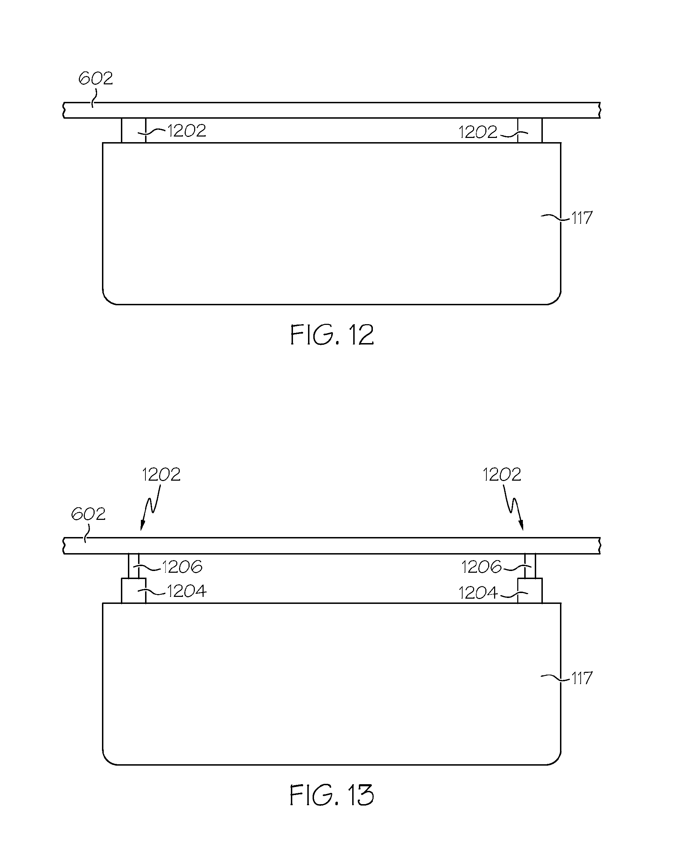

Yet another exemplary embodiment illustrated in FIGS. 12 and 13 includes the visor display 117 coupled to the rail 602 by a telescoping extension 1202. The telescoping extension 1202 has a first rod formed as a cylinder, or hollow tube 1204 that slideably accepts a second rod 1206 therewithin, wherein the visor display 117 may be adjusted from a first position shown in FIG. 12 to a second position shown in FIG. 13.

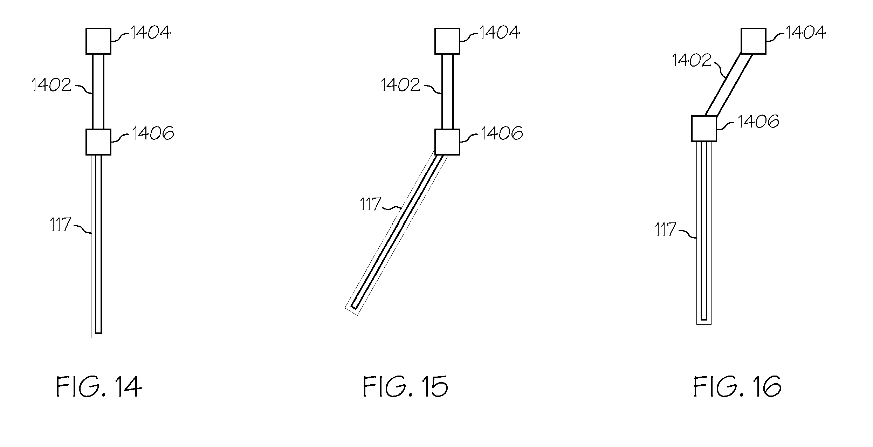

FIGS. 14, 15, and 16 illustrate still another exemplary embodiment wherein the visor display is coupled to the rail by an articulated arm 1402. A first elbow joint 1404 is coupled between the rail 601 and the articulated arm 1402, and a second elbow joint 1406 is coupled between the articulated arm 1402 and the visor display 117. The elbow joint 1404 may be attached to, or positioned around, the rail 602. Each of the elbow joints 1404 and 1406 may be rotated up to 90 degrees, for example. In FIG. 15, the visor display 117 has been rotated with respect to the elbow joint 1406 to about 30 degrees from the vertical, while in FIG. 16, the articulated arm 1402 has been rotated with respect to the elbow joint 1404 to about 45 degrees from the vertical.

It has been shown that the disclosed display presents text and images while minimizing any distractions to the pilot maintaining visual awareness outside the aircraft. One or more visor displays may be positioned in the windscreen viewing field or positioned up away from the viewing field against the cockpit ceiling. The visors may be darkened to provide a sunscreen. The one or more visors may be moved along a rail to a position by the left side window, anywhere on the front windscreen, or the right side window. A visor may be positioned in front of both pilots at the front window center post so both pilots can review the information. A transparent organic light emitting diode (OLED) display is preferred due to its light weight, transparency, excellent image quality with a large color gamut, high speed video, and a wide viewing angle. The rail on which the visor or visors may be mounted includes an electronics cable for providing power and data to the visor. The information displayed on the visor may be, for example, conformal images of actual objects outside the aircraft and flight information including aircraft flight data, aircraft system data, and navigation data.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A display system for an aircraft having a first front windscreen and a first side window, the display system comprising:
a rail (602) positioned above the first windscreen (604);
a visor display (117) rotatably mounted to the rail so as to be positioned in one of above or in the field of view of the first front windscreen; and
a processor (104) configured to provide at least one of text and images to the visor display.

2. The display system of claim 1 wherein the aircraft has a first side window, the rail being positioned above the first side window and the visor display being slideably mounted to the rail so as to be positioned in one of above or in the field of view of the first front windscreen.

3. The display system of claim 1 wherein the aircraft has a second front windscreen (606), a first side window, and a second side window, the rail being positioned above the second front windscreen, the first side window, and the second side window, and the visor display being slideably mounted to the rail so as to be positioned in one of above or in the field of view of the second front windscreen, the first side window, and the second side window.

4. The display system of claim 3 further comprising:
a second visor display (117) rotatably and slideably mounted on the rail so as to be in one of above or in the field of view of the first and second front windscreens and the first and second side windows.

5. The display system of claim 1 further comprising:
a cable (1104) configured to provide power and data to the first visor display, the cable positioned within an opening defined by the rail.

6. The display system of claim 1 further comprising:
circuitry positioned within the first visor display and configured to receive data.

7. The display system of claim 1 wherein the first visor display comprises:
a transparent organic light emitting diode display.

8. The display system of claim 1 wherein the processor is configured to provide at least one of a menu, data, or a conformal view of the field of view of an exterior of the structure.

9. The display system of claim 1 further comprising:
a sensor configured to determine and provide an output of the environment of the exterior of the structure; and
the processor being configured to convert the output to a conformal view for display on the first visor display.

10. The display system of claim 1 wherein the first visor display is further configured to shade the sun.
